# EUROPEAN PATENT SPECIFICATION

(11) **EP 3 960 833 B1**
(45) Date of publication and mention of the grant of the patent: **14.08.2024**
(21) Application number: 20863172.1
(22) Date of filing: 18.06.2020
(51) Int. Cl.: C09K 5/04, F25B 25/00

(54) **HEAT TRANSFER COMPOSITION AND HEAT EXCHANGE SYSTEM**
WÄRMEÜBERTRAGUNGSZUSAMMENSETZUNG UND WÄRMETAUSCHERSYSTEM
COMPOSITION CALOPORTEUSE ET SYSTÈME D'ÉCHANGE DE CHALEUR

(30) Priority: 12.09.2019 CN 201910863809
(43) Date of publication of application: 02.03.2022
(73) Proprietor: Gree Electric Appliances, Inc. of Zhuhai, Zhuhai, Guangdong 519070 (CN)
(72) Inventor: ZHANG, Youlin, Zhuhai, Guangdong 519070 (CN); YU, Yancui, Zhuhai, Guangdong 519070 (CN); ZHAO, Huan, Zhuhai, Guangdong 519070 (CN); LEI, Peiyu, Zhuhai, Guangdong 519070 (CN); LIANG, Youxuan, Zhuhai, Guangdong 519070 (CN); HUANG, Yujie, Zhuhai, Guangdong 519070 (CN)
(74) Representative: V.O.
(86) International application number: PCT/CN2020/096848
(87) International publication number: WO 2021/047231

(56) References cited:
- WO-A1-2018/212204
- AU-A4- 2013 101 793
- CN-A- 102 971 394
- CN-A- 109 804 037
- CN-A- 110 591 652
- US-B2- 9 982 180

## Description

### Technical Field

The present disclosure relates to a refrigeration cryogenic technology, specifically to a heat transfer composition and use of the heat transfer composition, a heat exchange system and a method for replacing an existing heat exchange fluid contained in the heat exchange system.

### Background

R134a (1,1,1,2-tetrafluoroethane) is hydrofluorocarbon, which is different from chlorofluorocarbons or hydrochlorofluorocarbons. It does not have significant ozone depletion potential (ODP). Since 1990s, R134a has been used as alternative refrigerant gas for the chlorofluorocarbon or hydrochlorofluorocarbon which has significant ODP and is regulated by the Montreal Protocol.

As the most widely used low and medium-temperature environmentally friendly refrigerants, R134a is a very effective and safe alternative to R-12 due to its good comprehensive performance. It is mainly used in most areas where an R12 refrigerant is used, including: refrigerators, freezers, water dispensers, automobile air conditioners, central air conditioners, dehumidifiers, refrigeration houses, commercial refrigeration, water chillers, ice cream machines, refrigeration condensing units and other refrigeration equipment, and can also be used in aerosol propellants, medical aerosols, insecticide sprays, poly(plastic)physical foaming agents, magnesium alloy shielding gas, and other industries.

WO2018/212204A1 disclosed a substituent mixed refrigerant of which, when the permissible concentration (OEL) of R1234yf was 200ppm, the OEL of the composition as a whole was at least 400ppm. A refrigerant-containing composition, wherein the refrigerant includes difluoromethane (R32), 2,3,3,3-tetrafluoropropene (R1234yf) and trans-1,3,3,3-tetrafluoropropene, and the mass ratio of the three components was within the range of the region enclosed by the lines 1, b, c, d and e that connect the points A, B, C, D and E.

CN102971394A disclosed a heat transfer systems, methods and compositions which utilize a heat transfer fluid comprising: (a) from about 30% to about 65% by weight of HFC-134a (1,1,1,2-tetrafluoroethane); (b) from about 0% to about 70% by weight of HFO1234ze (1,3,3,3-tetrafluoropropene); and (c) from about 0% to about 70% by weight of HFO-1234yf (2,2,3,3-tetrafluoropropene), provided that the amount of HFO-1234ze and HFO-1234yf in the composition together was at least about 35% by weight, with the weight percent being based on the total of the components (a) - (c) in the composition.

However, the problem of global warming is becoming more and more serious. Although R134a has a little destroy effect on the ozone layer, its GWP value is 1300, so R134a is a controlled HFCs refrigerant listed in the Kigali Amendment and will soon be eliminated in the future (It has been limited in the European regulations and its availability and use in air-conditioning or refrigeration equipment will be gradually limited). Therefore, it is urgent to find a refrigerant with outstanding environmentally friendly performance that not only meets an environmental protection requirement but also meets an energy efficiency requirement of an air-conditioning system and an R134a replacement refrigerant with good comprehensive performance.

### Summary

In view of this, the present disclosure provides a heat transfer composition with higher environmental friendliness and better thermal performance. It has a GWP less than or equal to 600, has obvious environmental protection advantages, and has good thermal performance applicable to a heat transfer system such as a refrigeration system of an air conditioner. The problem of low refrigeration capacity of a current existing refrigerant that replaces R134a can be solved.

The invention is set out in the appended set of claims.

In order to achieve the above purpose, the present disclosure adopts the technical solution: a heat transfer composition. The heat transfer composition is composed of three components: 1,1,1,2-tetrafluoroethane (R134a) with a mass ratio of 36% or 38%-40% or 46%, 2,3,3,3-tetrafluoropropene (R1234yf) with a mass ratio of 48%-55%, and trans-1,3,3,3-tetrafluoropropene (R1234ze(E)) with a mass ratio of 5%-8% or 11%. The mass ratio is based on the total mass of all the components of the heat transfer composition. The heat transfer composition has a global warming potential (GWP) not greater than 600.

Further, the heat transfer composition is composed of three components: 1,1,1,2-tetrafluoroethane (R134a) with a mass ratio of 46%, 2,3,3,3-tetrafluoropropene (R1234yf) with a mass ratio of 48%, and trans-1,3,3,3-tetrafluoropropene (R1234ze(E)) with a mass ratio of 6%. By considering the flammability, the GWP, and the energy efficiency, the three-component heat transfer composition is better.

Further, the slip in temperature of the heat transfer composition is less than 0.5°C.

The present disclosure further provides a method for replacing an existing heat exchange fluid contained in a heat exchange system, including: removing at least a part of the existing heat exchange fluid from the system, the existing heat exchange fluid being R134a; and by means of introducing a heat transfer composition into the system to replace at least a part of the existing heat exchange fluid, forming any one of the above heat transfer composition, the refrigeration capacity being ensured to be 90% to 110% of the refrigeration capacity of the R134a refrigerant.

The present disclosure further provides a heat exchange system including a compressor, a condenser, an evaporator and an expansion device which are fluidly connected, and a heat transfer composition that realizes fluid connection. The heat transfer composition is any one of the above heat transfer compositions.

Further optionally, the heat exchange system is an HVACR system.

Further, the heat exchange system is a centrifugal chiller; the compressor is an oil-free centrifugal compressor; and the condenser and the evaporator are shell-and-tube heat exchanger. The condenser is a shell-and-tube heat exchanger, or a finned-tube heat exchanger.

Further, the heat transfer composition is used for the HVACR system.

Further, the heat transfer composition is used for any one of air-conditioning systems of motor vehicles, household, commercial and industrial air-conditioning equipment, household, commercial and industrial refrigerators, refrigeration houses, freezers, refrigeration conveyors, ice machines, and dehumidifiers.

All the components in the present disclosure are commercially available, or prepared by existing methods in the art. The ratios of all the components in the present disclosure are obtained after massive screenings, which is the condition to ensure the excellent performance of the heat transfer composition.

The present disclosure has the beneficial effects.
(1) The 1,1,1,2-tetrafluoroethane (R134a) introduced in the present disclosure is a non-flammable refrigerant, and the flammability of the 2,3,3,3-tetrafluoropropene (R1234yf) and the flammability of the trans 1,3,3,3-tetrafluoropropene (R1234ze(E)) can be reduced by means of changes of the components, thereby obtaining a heat transfer composition having good safety performance, a GWP less than or equal to 600, and zero ODP.
(2) Compared with the R134a refrigerant, the heat transfer composition of the present disclosure has comparative relative volumetric refrigeration capacity and relative COP, and can replace the R134a refrigerant.
(3) Besides the volumetric refrigeration capacity and energy efficiency, the selection of constituents and components of the heat transfer composition of the present disclosure also considers slip in temperature. A combination with a large boiling point difference between constituents may form a non-azeotropic mixture with a large phase change temperature difference (a slip in temperature), and the slip in temperature of the mixed working medium of the present disclosure is less than 0.52°C.

### Brief Description of the Drawings

The above-mentioned and other objectives, features and advantages of the present disclosure will become more apparent by describing example embodiments in detail with reference to the accompanying drawings. The drawings in the following description are only some embodiments of the present disclosure. Those of ordinary skill in the art can further obtain other drawings according to these drawings without creative work.

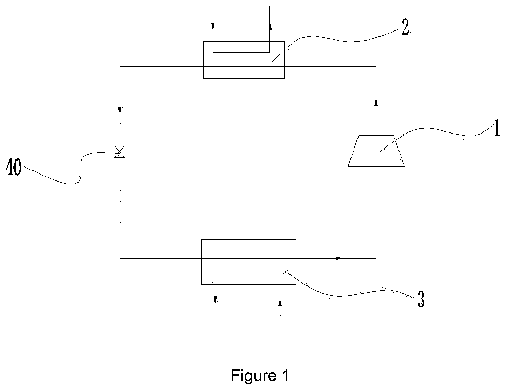

FIG. 1 is a diagram of a unipolar compression cycle system of a centrifugal chiller in one embodiment of the present disclosure.

In the drawings:
1: compressor; 2: condenser; 3: evaporator; 40: throttling device.

### Detailed Description of the Embodiments

The promising heat transfer fluids on the market must satisfy certain very special physical, chemical, and economic properties, and, in some cases, must be an extremely strict combination that satisfies the physical, chemical, and economic properties. Moreover, there are many different types of heat transfer systems and heat transfer equipment. In many cases, it is important that the heat transfer fluid used in such systems should have a special combination that satisfy various properties required by individual systems. For example, a system based on a vapor compression cycle usually involves the phase change of a refrigerant, that is, at a relatively low pressure, the refrigerant is transformed from liquid to a vapor phase by heat absorption, and the vapor is compressed at a relatively elevated pressure. The heat is removed at the relatively elevated pressure and temperature, and the vapor is condensed into a liquid phase. Then, this cycle is restarted at reduced pressure.

As one of the most widely used low and medium-temperature environmentally friendly refrigerants, R134a is a very effective and safe alternative to R-12 due to its good comprehensive performance. It is used in most areas where an R12 refrigerant is used.

However, with the global warming, some new measures have emerged (for example, the Kigali Amendment to the Montreal Protocol, the Paris Agreement, and the Significant New Alternatives Policy, "SNAP")) to phase out refrigerants with high global warming potential (GWP), such as some HFC refrigerants.

The low and medium-temperature environmentally-friendly refrigerant R134a (1,1,1,2-tetrafluoroethane) with the GWP of 1300 has good comprehensive performance (which is non-flammable, explosive, non-toxic, non-irritating, and non-corrosive), but it is still proposed to be replaced.

HFO (such as R1234yf, R1234ze(E)) is proposed as an alternative to the R134a (its GWP is 1300).

Basic parameters of the three constituent substances are listed in Table 1.

**Table 1 Basic parameters of constituent substances in the heat transfer component**

| Member | Name | Chemical | Molecular weight, g/mol | Standard boiling point, °C | Critical temperature, °C | Critical pressure , MPa | ODP | GWP |
|---|---|---|---|---|---|---|---|---|
| R134a | 1,1,1,2-tetrafluoroethane | CH₂FCF₃ | 102.03 | -26.07 | 101.06 | 4.059 | 0 | 1300 |
| R1234yf | 2,3,3,3-tetrafluoropropene | CF₃CF=CH₂ | 114.04 | -29.49 | 94.7 | 3.382 | 0 | 1 |
| R1234ze( E) | trans-1,3,3,3-tetrafluoropropene | CHF=CHCF₃ | 114.04 | -18.97 | 109.36 | 3.635 | 0 | 1 |

Since there is no chlorine atom in the molecule, the ODP of the R1234yf is 0. Since the R1234yf has a lifespan of only 11 days in the atmosphere, the GWP is 1, and atmospheric decomposition products are the same as those of the R134a. The impact of the R1234yf on the climate environment can be almost negligible, which is much lower than that of the R134a. Safe R1234yf has no flash point and is weakly flammable. The flammability of the R1234yf is far lower than that of several currently known flammable refrigerants. The R1234yf is a low-toxic chemical substance and belongs to level A of ASHRAE toxicity. However, the disadvantage is that it has lower refrigeration capacity and lower thermodynamic efficiency compared to the R134a.

The GWP of the R1234ze(E) is 1, which is much less than that of the R134a, but it is flammable (classified as A2L according to the ASHRAE standard 34) and has lower refrigeration capacity than the R134a.

However, it is surprised to find that although some significant physical and chemical properties of the R1234yf and the R1234ze(E) are known. Either R1234yf or R1234ze(E), when only these single refrigerants are used as the heat transfer compositions in a large-sized refrigeration air-conditioning system, particularly such as a centrifugal chiller, it is very hard to ensure the heat exchange capacity and the energy efficiency ratio of an original heat exchange system taking R134a as a refrigerant. Particularly, if it is desired that the GWP shall not be greater than 600, it is very hard to satisfy the heat exchange capacity and the energy efficiency ratio without other adaptive adjustment.

In some HVACR implementation solutions designed for the R134a, people often expect a refrigerant composition or an improved composition to be similar to the R134a, so that there is no need to adjust the HVACR system or the HVACR system is adjusted a little. For example, the refrigeration capacity of the R134a refrigerant can be ensured to be 90% to 110%. However, as it is known, the performance of a refrigerant is based on the properties of a refrigerant composition. If the properties of the refrigerants are different, parameters such as the refrigeration capacity, the slip in temperature, the coefficient of performance, the discharge temperature of the compressor, the mass flow rate, and the density of the refrigerant in a fluid phase may be different. If it cannot ensure that the HVACR system is adjusted to use a working fluid with refrigeration capacity greater than 110% or less than 90%, this may result in requiring a pressure that exceeds a design limit, a larger number of refrigerants, and/or a relatively large temperature difference that reduces the efficiency of the HVACR system.

Based on the comprehensive consideration of the heat transfer capacity, the energy efficiency ratio and the GWP value of the above heat transfer composition, it is surprised to find that if the 1,1,1,2-tetrafluoroethane (R134a), the 2,3,3,3-tetrafluoropropene (R1234yf), and the trans-1,3,3,3-tetrafluoropropene (R1234ze(E)) are combined together, the advantages of these substances will be integrated more favorably to maximize their strengths and avoid their weaknesses. Thereby the GWP value is not greater than 600 and further the comprehensive performance such as the refrigeration capacity is 90% to 110% of the refrigeration capacity of the R134a refrigerant in high heat transfer capacity, and high energy efficiency ratio (such as COP equal to 0.96). Especially when the 1,1,1,2-tetrafluoroethane (R134a) with the mass ratio of 36% or 38%-40% or 46%, the 2,3,3,3-tetrafluoropropene (R1234yf) with the mass ratio of 48%-55%, and the trans-1,3,3,3-tetrafluoropropene (R1234ze(E)) with the mass ratio of 5%-8% or 11% are used, this advantage is even more prominent.

The main purpose of the present disclosure is to provide a heat transfer composition which can be used as a substitute or alternative to the R134a, and/or other substitutes or alternatives that contains fluorohydrocarbons (HFC), hydrogen fluoride olefin (HFO), and hydrogen fluoride ether (HFE) to the R134a. Compared to the R134a, especially in terms of the GWP, the heat transfer composition has improved environmental impact characteristics and higher thermal characteristics, is particularly suitable for use in, for example, air conditioners of motor vehicles and household, commercial and industrial air-conditioning and refrigeration applications, and has the thermodynamic characteristics of replacement refrigerant gas with improved characteristics.

A preparation method of the heat transfer composition of the present disclosure is to physically mix 1,1,1,2-tetrafluoroethane (R134a), 2,3,3,3-tetrafluoropropene (R1234yf) and trans 1,3,3,3-tetrafluoropropene (R1234ze(E)) in a liquid phase state at a temperature of 23°C -27°C and a pressure of 0.1 MPa according to their corresponding mass ratios. The 1,1,1,2-tetrafluoroethane is a non-flammable component. By adding the non-flammable components in their mass ratios, the flammability of other components can be reduced, so as to meet the requirements of safety and energy efficiency ratio.

Multiple specific embodiments are provided below. The proportions of the components are all mass percentages, and the sum of the mass percentages of the component substances of each kind of heat transfer composition is 100%.

Embodiment 1, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 36: 53: 11, uniformly, to obtain a heat transfer composition.

Embodiment 2, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 38: 54: 8, uniformly, to obtain a heat transfer composition.

Embodiment 3, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 40: 55: 5, uniformly, to obtain a heat transfer composition.

Embodiment 4, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 46: 48: 6, uniformly, to obtain a heat transfer composition.

Comparative example 1, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 25: 64: 11, uniformly, to obtain a heat transfer composition.

Comparative example 2, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 50: 47: 3, uniformly, to obtain a heat transfer composition.

Comparative example 3, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 46: 31: 23, uniformly, to obtain a heat transfer composition.

Comparative example 4, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 38: 37: 25, uniformly, to obtain a heat transfer composition.

Comparative example 5, two components: 1,1,1,2-tetrafluoroethane (R134a) and 2,3,3,3-tetrafluoropropene (R1234yf) are physically mixed in a liquid phase at a temperature of 23°C -27 °C and a pressure of 0.1 MPa according to mass ratios of 46: 54, uniformly, to obtain a heat transfer composition.

Comparative example 6, two components: 1,1,1,2-tetrafluoroethane (R134a) and 1,3,3,3-tetrafluoropropene (R1234ze(E)) are physically mixed in a liquid phase at a temperature of 23°C - 27°C and a pressure of 0.1 MPa according to mass ratios of 46: 54, uniformly, to obtain a heat transfer composition.

Comparative example 7, two components: 2,3,3,3-tetrafluoropropene (R1234yf) and 1,3,3,3-tetrafluoropropene (R1234ze(E)) are physically mixed in a liquid phase at a temperature of 23°C - 27°C and a pressure of 0.1 MPa according to mass ratios of 46: 54, uniformly, to obtain a heat transfer composition.

Comparative example 8, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 28: 49: 23, uniformly, to obtain a heat transfer composition.

Comparative example 9, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 46: 33: 21, uniformly, to obtain a heat transfer composition.

Comparative example 10, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 30: 69: 1, uniformly, to obtain a heat transfer composition.

Comparative example 11, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 32: 62: 6, uniformly, to obtain a heat transfer composition.

Comparative example 12, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 34: 51: 15, uniformly, to obtain a heat transfer composition.

Comparative example 13, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 30: 48: 22, uniformly, to obtain a heat transfer composition.

Comparative example 14, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 28: 71: 1, uniformly, to obtain a heat transfer composition.

Comparative example 15, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 30: 63: 7, uniformly, to obtain a heat transfer composition.

Comparative example 16, three components: 1,1,1,2-tetrafluoroethane (R134a), 2,3,3,3-tetrafluoropropene (R1234yf), and trans 1,3,3,3-tetrafluoropropene (R1234ze(E)) are physically mixed in a liquid phase at a temperature of 23°C -27°C and a pressure of 0.1 MPa according to mass ratios of 33: 59: 8, uniformly, to obtain a heat transfer composition.

In Table 2, basic parameters such as molecular weights, standard boiling points, and environmental performance of the above-mentioned embodiments and R134a are compared.

**Table 2 Basic parameters of the heat transfer composition**

| Refrigerant | Molecular weight g/mol | Standard boiling point, °C | Critical temperature, °C | Critical pressure MPa | GWP |
|---|---|---|---|---|---|
| R134a | 102.03 | -25.7 | 101.1 | 4.06 | 1300 |
| Embodiment 1 | 109.41 | -28.98 | 96.34 | 3.664 | 468.64 |
| Embodiment 2 | 109.16 | -29.15 | 95.98 | 3.662 | 494.62 |
| Embodiment 3 | 108.91 | -29.32 | 95.59 | 3.658 | 520.6 |
| Embodiment 4 | 108.18 | -29.08 | 96.12 | 3.703 | 598.54 |
| Comparative example 1 | 110.78 | -29.17 | 95.89 | 3.593 | 325.75 |
| Comparative example 2 | 107.70 | -29.17 | 95.87 | 3.711 | 650.5 |
| Comparative example 3 | 108.18 | -27.60 | 98.92 | 3.780 | 598.54 |
| Comparative example 4 | 109.16 | -27.75 | 98.63 | 3.734 | 494.62 |
| Comparative example 5 | 108.18 | -29.52 | 9504 | 3.662 | 598.54 |
| Comparative example 6 | 108.18 | -23.63 | 104.12 | 3.839 | 598.54 |
| Comparative example 7 | 114.04 | -25.93 | 100.40 | 3.511 | 1 |
| Comparative example 8 | 110.40 | -28.24 | 97.69 | 3.659 | 364.72 |
| Comparative example 9 | 108.18 | -27.79 | 98.60 | 3.773 | 598.54 |
| Comparative example 10 | 110.15 | -29.77 | 94.54 | 3.568 | 390.7 |
| Comparative example 11 | 109.9 | -29.41 | 95.4 | 3.613 | 416.68 |
| Comparative example 12 | 109.65 | -28.72 | 96.84 | 3.669 | 442.66 |
| Comparative example 13 | 110.15 | -28.27 | 97.66 | 3.669 | 390.7 |
| Comparative example 14 | 110.4 | -29.78 | 94.5 | 3.556 | 364.72 |
| Comparative example 15 | 110.15 | -29.38 | 95.48 | 3.606 | 390.7 |
| Comparative example 16 | 109.78 | -29.26 | 95.74 | 3.630 | 429.67 |

It can be known in Table 2 that the GWP of the three-component heat transfer composition provided by the present disclosure is less than or equal to 600, and the ODP is 0, so the heat transfer composition has an obvious advantage in environmental protection, and its GWP is much less than that of the R134a. In addition, the molecular weight of the three-component heat transfer composition is slightly greater than that of the R134a, and the critical point is lower than that of the R134a. Meanwhile, it can be seen in combination with the data in the embodiments and the comparative examples that when the contents of the formula components in the present disclosure are changed or a mixed working medium is prepared, the components cannot well achieve a synergistic effect, which will increase the GWP and/or slip in temperature and/or flammability of the mixed working medium and affect the heat exchange effect and the environmental friendliness of the unit during use. Meanwhile, reducing the number of kinds of the components in the formula will also increase the GWP and/or slip in temperature and/or flammability. The content of the R134a in Comparative example 1 is less than the mass ratio of the present disclosure. Although the GWP of the composition is lower, the flammability is enhanced. The content of the R134a in Comparative example 2 is greater than the mass ratio of the present disclosure, and the GWP of the composition is relatively high. The composition in Comparative example 6 does not contain R134a, so it is flammable and less safe.

In Table 3, thermal parameters (i.e., a compression ratio and a discharge temperature) and relative thermal performances (i.e., relative refrigeration capacities per unit and relative efficiency COP) of the heat transfer composition in the above embodiments and the R134a under refrigeration conditions (i.e., an evaporation temperature is 6°C, a condensation temperature is 36 °C, a degree of superheat is 5°C, and a degree of supercooling is 5°C) are compared.

**Table 3 Performance comparison results between the heat transfer composition and the R134a**

| Refrigerant | Slip in temperature, °C | Discharge temperature, °C | Compression ratio | Relative volumetric refrigeration capacity | Relative COP |
|---|---|---|---|---|---|
| | | | | | |
| R134a | 0 | 56.82 | 2.852 | 1 | 1 |
| Embodiment 1 | 0.23 | 5202 | 2.778 | 0.996 | 0.9736 |
| Embodiment 2 | 0.17 | 51.97 | 2.766 | 1.005 | 0.9768 |
| Embodiment 3 | 0.11 | 51.94 | 2.755 | 1.014 | 0.9799 |
| Embodiment 4 | 0.16 | 52.46 | 2.767 | 1.014 | 0.9811 |
| Comparative example 1 | 0.2 | 51.24 | 2.769 | 0.986 | 0.9689 |
| Comparative example 2 | 0.11 | 52.58 | 2.76 | 1.024 | 0.9848 |
| Comparative example 3 | 0.55 | 53.67 | 2.857 | 0.961 | 0.9658 |
| Comparative example 4 | 0.58 | 53.16 | 2.855 | 0.954 | 0.9614 |
| Comparative example 5 | 0.02 | 5208 | 2.741 | 1.031 | 0.986 |
| Comparative example 6 | 0.61 | 55.71 | 3.019 | 0.856 | 0.949 |
| Comparative example 7 | 0.99 | 52.22 | 2.973 | 0.844 | 0.924 |
| Comparative example 8 | 0.49 | 52.22 | 2.830 | 0.957 | 0.9601 |
| Comparative example 9 | 0.5 | 53.52 | 2.846 | 0.968 | 0.9676 |
| Comparative example 10 | 0.05 | 51.04 | 2.733 | 1.014 | 0.9776 |
| Comparative example 11 | 0.11 | 51.43 | 2.752 | 1.005 | 0.9757 |
| Comparative example 12 | 0.32 | 52.13 | 2.795 | 0.983 | 0.9694 |
| Comparative example 13 | 0.47 | 52.31 | 2.827 | 0.961 | 0.9617 |
| Comparative example 14 | 0.05 | 50.92 | 2.733 | 1.011 | 0.9764 |
| Comparative example 15 | 0.13 | 51.35 | 2.755 | 1.001 | 0.9740 |
| Comparative example 16 | 0.15 | 51.61 | 2.762 | 1.001 | 0.9747 |

| | | | | | |
|---|---|---|---|---|---|
| (*Note: The slip in temperature is a difference between a dew point temperature and a bubble point temperature under a working pressure, and the maximum value is used) | | | | | |

It can be seen from Table 3 that the volumetric refrigeration capacity of refrigerants in some formulas is greater than the volumetric refrigeration capacity of the R134a, and a slip in temperature is less than 0.2 °C. These refrigerants are azeotropic refrigerants. The volumetric refrigeration capacity of refrigerants in other formulas is less than the volumetric refrigeration capacity of the R134a, but its relative volumetric refrigeration capacity is not less than 0.95, and a slip in temperature is less than 0.6°C. These refrigerants are near-azeotropic refrigerants. The energy efficiency COP in all the formulas is less than the energy efficiency COP of the R134a, but it is greater than 0.95. It can be seen from the comparative examples that the reduction of the components of the heat transfer composition of the present disclosure will affect the performance of the composition, such as enhancing the flammability, increasing the slip in temperature, reducing its relative volumetric refrigeration capacity, increasing the compression ratio, etc. Compared with other embodiments, the comprehensive performance of the refrigerants in Embodiments 1 to 4 in terms of the slip in temperature, the relative volumetric refrigeration capacity, the COP, and the like.

It should be noted that the R1234yf or the R1234ze(E) can exist as different isomers or stereoisomers. Unless otherwise stated, the implementation solutions disclosed herein include all single isomers, single stereoisomers, or any combination or mixture thereof. For example, the R1234ze(E) includes only an E (trans) isomer of the R1234ze, and does not include a Z (cis) isomer.

Therefore, the heat transfer composition provided by the present disclosure to replace the R134a not only has the environmental protection characteristics of low GWP and zero ODP, but also has excellent thermal performance. Under the same refrigeration conditions, the volumetric refrigeration capacity and the energy efficiency COP of a refrigeration device using the heat transfer composition are equivalent to using the R134a refrigerant. The slip in temperature is small. The heat transfer composition can become an environmentally friendly refrigerant to replace the R134a. Meanwhile, the heat transfer composition provided in the present disclosure to replace the R134a can be alternatively added with lubricants, stabilizers, highly polar solvents, and other additives according to the needs of a refrigeration system, so as to improve the performance of the heat transfer composition and the stability of the refrigeration system.

FIG. 1 below is a schematic diagram of a refrigeration loop of a fluidly connected HVACR system according to one of the above implementation solutions of the heat transfer composition.

The refrigeration loop includes a compressor 1, a condenser 2, a throttling device 40, and an evaporator 3. It can be understood that parts of the refrigeration loop are fluidly connected by the heat transfer composition. The refrigeration loop is configured as a cooling system that can operate in a cooling mode (for example, a fluid cooler of HVACR, an air-conditioning system, etc.), and/or the refrigeration loop is configured to operate as a heat pump system that can operate in a cooling mode and a heating mode. The refrigeration loop applies the known principles of air compression and cooling. The refrigeration loop is configured to heat or cool process fluid (such as water and air). The refrigeration loop includes additional parts, such as an intermediate heat exchanger, one or more flow control devices, a four-way valve, a dryer, a liquid suction heat exchanger, and even a waste heat absorption heat exchanger for a power battery, according to the application.

The present embodiment is a centrifugal chiller. The compressor 1 is a centrifugal compressor. The evaporator 3 and the condenser 2 are of a shell-tube type. The working fluid uses the heat transfer composition described in the embodiments of the present disclosure.

As shown in FIG. 1, during the operation of the refrigerant loop in the present embodiment, the working fluid (such as a refrigerant and a refrigerant mixture) flows from the evaporator 3 into the compressor 1 in a gaseous state at a relatively low pressure. The compressor 1 compresses the air into a high-pressure state, which also heats the air. After the compression, the air with the relatively high pressure and relatively high temperature flows from the compressor 1 to the condenser 2. In addition to the refrigerant flowing through the condenser 2, external fluid (such as external air, external water, and cooling water) also flows through the condenser 2. When there is external fluid flowing through the condenser 2, the external fluid absorbs the heat from the working fluid. The working fluid is condensed into liquid, and then flows into the throttling device 40. The throttle device 40 reduces the pressure of the working fluid. The reduced pressure causes the working fluid to expand and transform into a mixed air-liquid state. Then, the air/liquid working fluid with relatively low temperature flows into the evaporator 3. The process fluid (such as air and water) also flows through the evaporator 3. According to the known principles, the working fluid absorbs the heat from the process fluid as it flows through the evaporator 3. When the working fluid absorbs the heat, the working fluid is evaporated into vapor. The working fluid then returns to the compressor 1. When the refrigeration loop operates in the cooling mode, the above process is continued.

The refrigerant compositions and methods herein are used in the refrigeration loop of the HVACR system. A method for improving the refrigerant composition is applied to a thermal loop. In addition, the refrigerant composition herein is used as a working fluid in the thermal loop, and is used in any one of air-conditioning systems of motor vehicles, household, commercial and industrial air-conditioning equipment, household, commercial and industrial refrigerators, refrigeration houses, freezers, refrigeration conveyors, ice machines, and dehumidifiers.

It can be understood that in the present embodiment, single-stage compression can also be changed to multi-stage compression. The specific multi-stage compression principle will be omitted here.

## Claims

1. A heat transfer composition, the heat transfer composition is composed of three components: 1,1,1,2-tetrafluoroethane with a mass ratio of 36% or 38%-40% or 46%, 2,3,3,3-tetrafluoropropene with a mass ratio of 48%-55%, and trans-1,3,3,3-tetrafluoropropene with a mass ratio of 5%-8% or 11%, wherein the mass ratio is based on the total mass of all the components of the heat transfer composition; and the heat transfer composition has a global warming potential not greater than 600.

2. The heat transfer composition according to claim 1, wherein the heat transfer composition is composed of three components: 1,1,1,2-tetrafluoroethane with a mass ratio of 46%, 2,3,3,3-tetrafluoropropene with a mass ratio of 48%, and trans-1,3,3,3-tetrafluoropropene with a mass ratio of 6%.

3. The heat transfer composition according to claim 1 or 2, wherein a slip in temperature of the heat transfer composition is less than 0.5°C.

4. A method for replacing an existing heat exchange fluid contained in a heat exchange system, comprising: removing at least a part of the existing heat exchange fluid from the system, the existing heat exchange fluid being R134a; and by means of introducing a heat transfer composition into the heat exchange system to replace at least a part of the existing heat exchange fluid, forming the above heat transfer composition according to any one of claims 1 to 3, the refrigeration capacity being ensured to be 90% to 110% of the refrigeration capacity of the R134a refrigerant.

5. A heat exchange system comprising a compressor, a condenser, an evaporator, an expansion device, which are fluidly connected, and a heat transfer composition that realizes fluid connection, wherein the heat transfer composition is the heat transfer composition according to claims 1 to 3.

6. The heat exchange system according to claim 5, wherein the heat exchange system is an HVACR system.

7. The heat exchange system according to claim 6, wherein the heat exchange system is a centrifugal chiller; the compressor is an oil-free centrifugal compressor; and the condenser and the evaporator are shell-and-tube heat exchanger.

8. Use of the heat transfer composition according to claims 1 to 7, wherein the heat transfer composition is used in an HVACR system, air-conditioning systems of motor vehicles, household, commercial and industrial air-conditioning equipment, household, commercial and industrial refrigerators, refrigeration houses, freezers, refrigeration conveyors, ice machines, or dehumidifiers.

## Patentansprüche

1. Wärmeübertragungszusammensetzung, wobei die Wärmeübertragungszusammensetzung aus drei Komponenten besteht: 1,1,1,2-Tetrafluorethan mit einem Massenanteil von 36 % oder 38 % - 40 % oder 46 %, 2,3,3,3-Tetrafluorpropen mit einem Massenanteil von 48 % - 55 % und trans-1,3,3,3-Tetrafluorpropen mit einem Massenanteil von 5 % - 8 % oder 11 %, wobei der Massenanteil auf der Gesamtmasse aller Komponenten der Wärmeübertragungszusammensetzung basiert; und die Wärmeübertragungszusammensetzung ein globales Erwärmungspotenzial von nicht mehr als 600 aufweist.

2. Wärmeübertragungszusammensetzung nach Anspruch 1, wobei die Wärmeübertragungszusammensetzung aus drei Komponenten besteht: 1,1,1,2-Tetrafluorethan mit einem Massenanteil von 46 %, 2,3,3,3-Tetrafluorpropen mit einem Massenanteil von 48 % und trans-1,3,3,3-Tetrafluorpropen mit einem Massenanteil von 6 %.

3. Wärmeübertragungszusammensetzung nach Anspruch 1 oder 2, wobei ein Temperaturschlupf der Wärmeübertragungszusammensetzung weniger als 0,5 beträgt.

4. Verfahren zum Ersetzen eines in einem Wärmetauschersystem enthaltenen vorhandenen Wärmetauscherfluids, umfassend: Entfernen mindestens eines Teils des vorhandenen Wärmetauscherfluids aus dem System, wobei das vorhandene Wärmetauscherfluid R134a ist; und durch Einführen einer Wärmeübertragungszusammensetzung in das Wärmetauschersystem, um mindestens einen Teil des vorhandenen Wärmetauscherfluids zu ersetzen, Bilden der oben genannten Wärmeübertragungszusammensetzung nach einem der Ansprüche 1 bis 3, wobei sichergestellt ist, dass die Kälteleistung 90 % bis 110 % der Kälteleistung des Kältemittels R134a beträgt.

5. Wärmetauschersystem, umfassend einen Kompressor, einen Kondensator, einen Verdampfer, eine Expansionseinrichtung, die fluidisch verbunden sind, und eine Wärmeübertragungszusammensetzung, die eine Fluidverbindung realisiert, wobei die Wärmeübertragungszusammensetzung die Wärmeübertragungszusammensetzung nach den Ansprüchen 1 bis 3 ist.

6. Wärmetauschersystem nach Anspruch 5, wobei das Wärmetauschersystem ein HVACR-System ist.

7. Wärmetauschersystem nach Anspruch 6, wobei das Wärmetauschersystem ein Zentrifugalkühler ist; der Kompressor ein ölfreier Zentrifugalkompressor ist; und der Kondensator und der Verdampfer Rohrbündelwärmetauscher sind.

8. Verwendung der Wärmeübertragungszusammensetzung nach den Ansprüchen 1 bis 7, wobei die Wärmeübertragungszusammensetzung in einem HVACR-System, Klimaanlagen von Kraftfahrzeugen, Haushalts-, Gewerbe- und Industrieklimaanlagenausrüstung, Haushalts-, Gewerbe- und Industriekühlschränken, Kühlhäusern, Gefrierschränken, Kühlförderanlagen, Eismaschinen oder Entfeuchtern verwendet wird.

## Revendications

1. Composition de transfert de chaleur, la composition de transfert de chaleur est composée de trois composants : 1,1,1,2-tétrafluoroéthane avec un rapport massique de 36 % ou de 38 % à 40 % ou de 46 %, 2,3,3,3-tétrafluoropropène avec un rapport massique de 48 % à 55 %, et trans-1,3,3,3-tétrafluoropropène avec un rapport massique de 5 % à 8 % ou de 11 %, dans laquelle le rapport massique est basé sur la masse totale de tous les composants de la composition de transfert de chaleur ; et la composition de transfert de chaleur présente un potentiel de réchauffement global qui n'est pas supérieur à 600.

2. Composition de transfert de chaleur selon la revendication 1, dans laquelle la composition de transfert de chaleur est composée de trois composants : 1,1,1,2-tétrafluoroéthane avec un rapport massique de 46 %, 2,3,3,3-tétrafluoropropène avec un rapport massique de 48 % et trans-1,3,3,3-tétrafluoropropène avec un rapport massique de 6 %.

3. Composition de transfert de chaleur selon la revendication 1 ou 2, dans laquelle une variation de la température de la solution de transfert de chaleur est inférieur à 0,5°C.

4. Procédé pour remplacer un fluide d'échange de chaleur existant contenu dans un système d'échange de chaleur, comprenant les étapes : retirer au moins une partie du fluide d'échange de chaleur existant du système, le fluide d'échange de chaleur existant étant du R134a ; et introduire une solution d'échange de chaleur dans le système d'échange de chaleur pour remplacer au moins une partie du fluide d'échange de chaleur existant, former la solution de fluide échangeur de chaleur ci-dessus selon l'une des revendications 1 à 3, la capacité de réfrigération étant assurée d'être de 90 % à 110 % de la capacité de réfrigération du fluide frigorigène R134a.

5. Système d'échange de chaleur comprenant un compresseur, un condenseur, un évaporateur, un dispositif de détente, qui sont reliés de manière fluide, et une composition de transfert de chaleur qui réalise une connexion de fluide, dans lequel la solution de transfert de chaleur est la solution de transfert de chaleur selon les revendications 1 à 3.

6. Système d'échange de chaleur selon la revendication 5, dans lequel le système d'échange de chaleur est un système HVACR.

7. Système d'échange de chaleur selon la revendication 6, dans lequel le système d'échange de chaleur est un refroidisseur centrifuge ; le compresseur est un compresseur centrifuge sans huile ; et le condenseur et l'évaporateur sont un échangeur de chaleur à calandre et tube.

8. Utilisation de la composition de transfert de chaleur selon les revendications 1 à 7, dans laquelle la solution de transfert de chaleur est utilisée dans un système HVACR, des systèmes de climatisation de véhicules à moteur, des équipements de climatisation domestiques, commerciaux et industriels, des réfrigérateurs domestiques, commerciaux et industriels, des chambres de réfrigération, des congélateurs, des convoyeurs de réfrigération, des machines à glace ou des déshumidificateurs.
